# EUROPÄISCHE PATENTSCHRIFT

(11) **EP 4 241 149 B1**
(45) Veröffentlichungstag und Bekanntmachung des Hinweises auf die Patenterteilung: **12.02.2025**
(21) Anmeldenummer: 21790855.7
(22) Anmeldetag: 12.10.2021
(51) Int. Cl.: G05D 1/00

(54) **STEUERVORRICHTUNG ZUR LÄNGS- UND/ODER QUERFÜHRUNG IN EINEM FAHRZEUGVERBAND**
CONTROL DEVICE FOR LONGITUDINAL AND/OR TRANSVERSE GUIDANCE IN A VEHICLE GROUP
DISPOSITIF DE COMMANDE POUR UN GUIDAGE LONGITUDINAL ET/OU TRANSVERSAL DANS UN GROUPE DE VÉHICULES

(30) Priorität: 06.11.2020 DE 102020129291
(43) Veröffentlichungstag der Anmeldung: 13.09.2023
(73) Patentinhaber: MAN Truck & Bus SE, 80995 München (DE)
(72) Erfinder: HAUPT, Christian, 80995 München (DE); ENGASSER, Julius, 80995 München (DE); BUSS, Alexander, 95352 Marktleugast (DE)
(74) Vertreter: v. Bezold & Partner Patentanwälte - PartG mbB
(86) Internationale Anmeldenummer: PCT/EP2021/078107
(87) Internationale Veröffentlichungsnummer: WO 2022/096234

(56) Entgegenhaltungen:
- US-A1- 2013 080 018

## Beschreibung

Die Erfindung betrifft eine Steuervorrichtung zur Längs- und/oder Querführung eines Fahrzeugs, insbesondere eines Nutzfahrzeugs, relativ zu wenigstens einem weiteren Fahrzeug in einem Fahrzeugverband.

Das Dokument US 2013/080018 A1 beschreibt ein Verfahren zur Bereitstellung von Informationen über die aerodynamischen Kräfte zur Verbesserung des Benzinverbrauchs und der Fahrstabilität eines Fahrzeugs. Insbesondere ist eine Vielzahl von Drucksensoren in einer Fahrzeugkarosserie vorgesehen und so konfiguriert, dass sie den Luftdruck messen, der von jedem von mehreren Punkten des Fahrzeugs aufgenommen wird, wenn das Fahrzeug gefahren wird. Eine erste Einheit berechnet dann einen Luftwiderstandswert durch Messen von aerodynamischen Kraftdaten, die das Fahrzeug von der Luft erhält, basierend auf einem Druckwert der Luft, der von dem Drucksensor erfasst wird, und Fahrinformationen, die von der Fahrt des Fahrzeugs abhängen. Eine Einheit ist so konfiguriert, dass sie einen Abstand zwischen einem eigenen Fahrzeug und anderen Fahrzeugen, die um das eigene Fahrzeug herumfahren, misst. Die von der ersten Einheit gemessenen Aerodynamikkraftdaten werden einem Fahrzeugdynamikkontrollsystem (VDC) und einem Fahrzeugstabilitätsmanagementsystem (VSM) zur Verfügung gestellt.

Das Dokument WO 2018/111177 A1 beschreibt eine Steuereinheit zum Einstellen eines Fahrzeugabstandes zwischen Fahrzeugen in einem Fahrzeugverband, der auch als Platoon bezeichnet werden kann. Die Steuereinheit ist dazu ausgebildet, eine geografische Position für ein Fahrzeug in dem Platoon zu erhalten, eine Zone zu bestimmen, in der sich die erhaltene geografische Position befindet, eine Mindestabstandsgrenze zwischen den Fahrzeugen zu bestimmen, welche der bestimmten Zone zugeordnet ist, und den Abstand zwischen den Fahrzeugen in dem Platoon gemäß der bestimmten Mindestabstandsgrenze einzustellen durch Senden eines Steuersignals an das Fahrzeug in dem Platoon.

Das Dokument WO 2019/068397 A1 beschreibt ein Verfahren zum Anordnen von Fahrzeugen, insbesondere Nutzfahrzeugen, in einem Platoon. Soll-Längsversätze und/oder Soll-Querversätze zwischen den einzelnen Fahrzeugen werden ermittelt. Dazu wird mindestens eine Wind-Wirkgröße ermittelt, die angibt, wie in einer Fahrzeugumgebung vorherrschender Wind auf mindestens eines der Fahrzeuge des Platoons einwirkt. Der Soll-Querversatz und/oder der Soll-Längsversatz für das jeweilige Fahrzeug des Platoons werden in Abhängigkeit der Wind-Wirkgröße derartig festgelegt, dass sich der zumindest auf eines der Fahrzeuge des Platoons wirkende Luftwiderstand unter dem vorherrschenden Wind verringert. Vorzugsweise wird die Position eines jeden Fahrzeugs des Platoons auch anhand von aerodynamischen Eigenschaften des jeweiligen Fahrzeugs bestimmt. Hierbei sind nicht nur die Fahrzeughöhe, die Fahrzeuglänge und die Fahrzeugbreite, sondern auch die Fahrzeuggeometrie innerhalb der Außenabmessungen, wie beispielweise vorder- oder rückseitige Luftleitsysteme, insbesondere Spoiler, die Geometrie des Fahrzeugaufbaus, aber auch die Art des Fahrzeugaufbaus relevant, da sich beispielweise bei gleicher Fahrzeuggeometrie ein Aufbau aus Plane und Spiegel bestehend, aerodynamisch von einem Kofferaufbau unterscheidet.

Mit anderen Worten ist bekannt, dass bei Fahrzeugen innerhalb eines Fahrzeugverbands (d.h. Platoons) durch die Reduzierung des Luftwiderstands der einzelnen Fahrzeuge Kraftstoffeinsparungen erzielt werden können. Ebenso ist bekannt, dass sich der Luftwiderstand der einzelnen Fahrzeuge innerhalb der Kolonne abhängig von deren Abständen zueinander ändert. Um energetisch optimale Fahrzeugabstände innerhalb der Kolonne einstellen zu können, ist die genaue Kenntnis des Zusammenhangs zwischen den Luftwiderständen der Fahrzeuge und den Fahrzeugabständen von zentraler Bedeutung. Energieeffiziente und automatisierte Steuerungen für Kolonnenfahrten nach dem Stand der Technik gehen von einem festen, meist durch Simulation bestimmten, Zusammenhang zwischen Luftwiderständen und Fahrzeugabständen aus.

Jedoch berücksichtigen diese herkömmlichen Systeme nicht die tatsächlichen Luftwiderstände der am Fahrzeugverband teilnehmenden Fahrzeuge. Die tatsächlichen Luftwiderstände können nicht nur individuell für die teilnehmenden Fahrzeuge sein. Die tatsächlichen Luftwiderstände können aufgrund von Eigenschaften der teilnehmenden Fahrzeuge, beispielsweise aufgrund eines veränderlichen Aufbaus oder einer von der Ladung abhängigen Außengeometrie und/oder Außenfläche, spezifisch für die jeweilige Fahrt der teilnehmenden Fahrzeuge sein und/oder sich während der Fahrt verändern.

Weiterhin kann der tatsächliche Zusammenhang zwischen den Luftwiderständen der Fahrzeuge und den Fahrzeugabständen allerdings komplexer sein und kann aufgrund sich ändernder Bedingungen während einer Kolonnenfahrt nicht als unveränderlich angenommen werden. Das bedeutet, dass die Energieeffizienz von Kolonnenfahrten bei besserer Kenntnis der abstandsabhängigen Luftwiderstände weiter erhöht werden kann.

Der Erfindung liegt die Aufgabe zugrunde, den Betrieb eines Fahrzeugverbandes mit mindestens zwei Fahrzeugen energieeffizienter durchzuführen, wobei vorzugsweise der Energiebedarf des gesamten Fahrzeugverbandes minimiert werden soll. Eine alternative oder spezifischere Aufgabe ist, dem energieeffizienten Betrieb eines Fahrzeugverbandes die tatsächlichen Luftwiderstände während der Fahrt zugrunde zu legen. Eine alternative oder spezifischere Aufgabe ist, beim energieeffizienten Betrieb eines Fahrzeugverbandes Einflüsse auf die Luftwiderstände zu berücksichtigen, die fahrtspezifisch sind oder sich während der Fahrt verändern, wobei vorzugsweise Eigenschaften der teilnehmenden Fahrzeuge die Einflüsse begründen. Eine weitere oder alternative Aufgabe ist, die Bestimmung des Zusammenhangs zwischen den aktuellen Luftwiderständen der Fahrzeuge eines Fahrzeugverbands und den Fahrzeugabständen innerhalb des Fahrzeugverbands während der Fahrt und der Einstellung der energetisch optimalen Fahrzeugabstände zwischen den Fahrzeugen des Fahrzeugverbandes.

Diese Aufgabe oder Aufgaben wird bzw. werden durch eine Vorrichtung mit den Merkmalen des unabhängigen Anspruches gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem Aspekt ist eine Steuervorrichtung zur Längs- und/oder Querführung eines Fahrzeugs, insbesondere eines Nutzfahrzeugs, relativ zu wenigstens einem weiteren Fahrzeug in einem Fahrzeugverband, bereitgestellt. Die Steuervorrichtung umfasst eine Bestimmungseinheit, die dazu ausgebildet ist, einen Fahrzeug-Luftwiderstand, FL, des Fahrzeugs und einen weiteren Fahrzeug-Luftwiderstand, wFL, des wenigstens einen weiteren Fahrzeugs zu bestimmen. Die Steuervorrichtung umfasst ferner eine Steuereinheit, die dazu ausgebildet ist, eine Steuergröße der Längs- und/oder Querführung des Fahrzeugs und/oder des wenigstens einen weiteren Fahrzeugs im Fahrzeugverband zu steuern. Die Steuervorrichtung umfasst ferner eine Speichereinheit, die dazu ausgebildet ist, den bestimmten FL und wFL in Zuordnung zu der gesteuerten Steuergröße in einem Kennfeld zu speichern.

Gemäß einem weiteren Aspekt, der mit dem vorgenannten Aspekt kombinierbar ist, ist die Steuereinheit dazu ausgebildet, die Steuergröße zu variieren, die Bestimmungseinheit ist dazu ausgebildet, den FL und den wFL im Zustand der variierten Steuergröße zu bestimmen, und die Speichereinheit ist dazu ausgebildet, den im Zustand der variierten Steuergröße bestimmten FL und wFL im Kennfeld in Zuordnung zu der variierten Steuergröße zu speichern.

Gemäß einem weiteren Aspekt, der mit den vorgenannten Aspekten kombinierbar ist, umfasst die Steuervorrichtung ferner eine Recheneinheit, die dazu ausgebildet ist, auf Grundlage des gespeicherten Kennfelds eine den FL und den wFL optimierende Steuergröße zu berechnen.

Gemäß einem weiteren Aspekt, der mit den vorgenannten Aspekten kombinierbar ist, ist die Steuereinheit ferner dazu ausgebildet, die Steuergröße der Längs- und/oder Querführung des Fahrzeugs und/oder des wenigstens einen weiteren Fahrzeugs im Fahrzeugverband gemäß der optimierten Steuergröße zu steuern.

Die Steuervorrichtung kann als Vorrichtung zur energieeffizienten Steuerung eines Fahrzeugverbands implementiert sein.

Die Steuervorrichtung kann jeweils zur elektronischen Datenverarbeitung ausgebildet sein und mittels unter anderem den folgenden Einheiten in ihrer Funktion bestimmt sein. Wobei die Steuervorrichtung weitere Einheiten aufweisen kann, sodass die Funktion an die Aufgabe der Steuervorrichtung angepasst werden kann. Beispielsweise kann die Steuervorrichtung ein Computer oder ein Microcomputer sein, welcher als ein Digitalrechner oder ein Hybridrechner ausgebildet ist, wobei die Größe der Steuervorrichtung von dem zu nutzenden Einbauort bestimmt sein kann.

Die Steuervorrichtung kann im Fahrzeug und/oder dem oder einem der wenigstens einen weiteren Fahrzeug implementiert sein.

Das Fahrzeug oder das wenigstens eine weitere Fahrzeug kann ein Kraftfahrzeug sein, das mittels einer Kraftmaschine angetrieben wird und zum Bewegen auf einer Fahrbahn, beispielweise einer Straße ausgebildet ist. Das Fahrzeug oder das wenigstens eine weitere Fahrzeug kann in einer speziellen Ausführungsform ein Nutzfahrzeug, ein Omnibus, ein Personenkraftwagen, ein Flurförderfahrzeug oder eine landwirtschaftliche Maschine sein.

Der Fahrzeugverband kann das Fahrzeug und das wenigstens eine weitere Fahrzeug umfassen. Der Fahrzeugverband kann ausschließlich Nutzfahrzeuge, beispielsweise ausschließlich Lastkraftwagen und/oder Sattelzüge, als Fahrzeuge umfassen. Alternativ oder ergänzend kann der Fahrzeugverband heterogen sein. Beispielsweise können sich das Fahrzeug und das wenigstens eine weitere Fahrzeug hinsichtlich ihrer jeweiligen Außengeometrie unterscheiden. Die Außengeometrie des Fahrzeugs und des wenigstens einen weiteren Fahrzeugs kann fahrtspezifisch sein, beispielsweise von einer Ladung des jeweiligen Fahrzeugs abhängen.

Eines der Fahrzeuge des Fahrzeugverbandes (beispielsweise das Fahrzeug oder das wenigstens eine weitere Fahrzeug) kann jeweils als ein Führungsfahrzeug ausgebildet sein, welches den Fahrzeugverband steuert. Dabei kann das Führungsfahrzeug auch ein sich dem Fahrzeugverband anschließendes Fahrzeug (oder Folgefahrzeug) sein beziehungsweise kann die Aufgabe des Führungsfahrzeugs auf ein sich dem Fahrzeugverband anschließendes Fahrzeug übertragen werden.

Der Fahrzeugverband kann beispielsweise ein Platoon und/oder eine Kolonne sein, welche die Bewegung von Fahrzeugen miteinander und/oder zueinander beschreibt. Dabei kann der Fahrzeugverband (vorzugsweise das steuernde Fahrzeug) den Fahrzeugen Vorgaben bezüglich des Fahrzeugverhaltens (vorzugsweise der Längs- und/oder Querführung) auferlegen, beispielsweise zu nutzende Abstände der Fahrzeuge zueinander und/oder Geschwindigkeiten.

Der Fahrzeug-Luftwiderstand (FL) kann beispielsweise als Strömungswiderstand des Fahrzeuges verstanden werden und/oder die auf das Fahrzeug wirkende Kraft beschreiben, die der Bewegung des Fahrzeuges entgegengesetzt wird. Dabei kann der Fahrzeug-Luftwiderstand den Betrieb des Fahrzeuges dahingehend nachteilig beeinflussen, dass der Betrieb einen erhöhten Energiebedarf erfordert als für den kinetischen Betrieb erforderlich wäre. Entsprechendes kann gelten für den weiteren Fahrzeug-Luftwiderstand (wFL) des wenigstens einen weiteren Fahrzeugs.

Die Bestimmungseinheit kann dazu ausgebildet sein, Daten mit Bezug auf den Fahrzeug-Luftwiderstand zu bestimmen. Dazu können unterschiedliche Einflüsse des Fahrzeug-Luftwiderstand auf das Fahrzeug bestimmt und mittels einer Gleichung beispielsweise einer Bestimmungsgleichung zu dem Fahrzeug-Luftwiderstand berechnet werden.

Die Steuergröße kann aus den Daten des Fahrzeug-Luftwiderstands abgeleitet sein. Alternativ oder ergänzend kann die Steuergröße oder eine der Steuergrößen zum Steuern des Fahrzeuges in seiner Relativbewegung zum wenigstens einen weiteren Fahrzeug ausgebildet sein. Dabei kann die Steuergröße unterschiedliche Parameter aufweisen, die vom Betrieb oder Betriebszustand des Fahrzeuges und des wenigstens einen weiteren Fahrzeugs in dem Fahrzeugverband abhängen.

Die Steuereinheit kann die Steuergröße nutzen, um das Fahrzeug und das wenigstens eine weitere Fahrzeug zueinander anzuordnen. Wobei die Steuergröße zum stetigen Anordnen des Fahrzeugs im Fahrzeugverband relativ zu dem wenigstens einen Fahrzeug genutzt werden kann. Während des Betriebes des Fahrzeugverbandes kann die Steuereinheit jeweils die Steuergröße variieren, wobei eine Variation der Steuergröße aufgrund des FLs und/oder des wFLs erfolgt.

Das Kennfeld kann mittels einer Feldspeicherstruktur, beispielsweise einem Array, einem Vektor oder eine Matrix, einer polynomialen Funktion oder einer Interpolation, vorzugsweise einer linearen Regression, implementiert sein. Wobei das Kennfeld wenigstens zum Speichern ausgebildet sein kann oder funktionale Zuordnungen während oder nach dem Speichern durchführt. Wobei die Speichereinheit jeweils das Kennfeld abspeichern und/oder die Zuordnungen durchführen kann.

Das Kennfeld kann bei der Erstellung des Fahrzeugverbandes durch Werte für den FL und den wFL initialisiert sein, die im jeweiligen Fahrzeug bei der Fahrt außerhalb des Fahrzeugverbandes gemessen oder hinterlegt sind.

Die Recheneinheit kann beispielsweise als elektronische Datenverarbeitung der Steuervorrichtung ausgebildet sein. Die Recheneinheit kann eine dedizierte elektronische Datenverarbeitung zur Berechnung des Kennfelds in der Steuervorrichtung sein.

Die optimierende Steuergröße kann als eine optimalere Steuergröße zur Senkung des FLs und/oder des wFLs verstanden werden, wobei sie von der Steuereinheit zum Steuern des Fahrzeuges verwendet werden kann.

Die Steuervorrichtung kann mittels der Bestimmungseinheit, der Steuereinheit, der Speichereinheit und der Recheneinheit zum Steuern des Betriebes des Fahrzeugs und des wenigstens einen weiteren Fahrzeugs innerhalb eines Fahrzeugverbandes ausgebildet sein. Der Fahrzeugverband kann bei seiner Erstellung (d.h. seiner Zusammenstellung) mittels vorgegebener Steuergrößen relativ zueinander angeordnet sein. Die vorgegebenen Steuergrößen können aufgrund eines vorherigen Betriebes des Fahrzeugverbandes oder eines anderen Fahrzeugverbandes ermittelt und/oder berechnet sein.

Die Speichereinheit kann während des Betriebs des Fahrzeugverbandes das Kennfeld aufgrund des bestimmten FLs und wFLs anpassen (beispielsweise ergänzen oder aktualisieren). Das Kennfeld kann den tatsächlichen (d.h. bei der Variation zuvor bestimmten) FL und wFL in Relation zu der eingestellten (d.h. der aus der Variation resultierenden) Steuergröße angeben. Mithilfe der Relation des Kennfelds, und optional der eingestellten (d.h. zuletzt aus der Variation resultierenden) Steuergröße, berechnet die Recheneinheit eine optimierte Steuergröße. Beispielsweise kann ein lokales Optimum des FL und wFL berechnet werden, welches das nächste lokale Optimum ausgehend von der eingestellten (d.h. zuletzt aus der Variation resultierenden) Steuergröße ist. So kann ein Fahrzeugmanöver bei der Steuerung gemäß der optimierten Steuergröße vereinfacht sein.

Durch das Anordnen des Fahrzeugverbandes aufgrund der optimierten Steuergröße kann ein minimaler gesamter Luftwiderstand, der aus dem FL und dem wFL gebildet ist, des Fahrzeugverbandes erreicht werden. Dieser minimale gesamte Luftwiderstand wird durch anpassen der optimierten Steuergröße mittels der Recheneinheit erreicht, die mittels des Kennfeldes, und optional der eingestellten Steuergröße, gebildet wird. Optional wird dabei das Kennfeld stets mittels des bestimmten FLs und/oder wFLs angepasst, sodass der Fahrzeugverband regelmäßig an geänderte Einflüsse (beispielsweise Fahrzeug-eigene oder Umwelt-Einflüsse) angepasst werden kann. Durch das regelmäßige Anpassen kann sichergestellt werden, dass der Fahrzeugverband energieeffizient betrieben wird.

Ausführungsbeispiele der Steuervorrichtung können die zugrunde liegenden Aufgabe des energieeffizienten Betriebes eines Fahrzeugverbandes lösen, beispielsweise indem die regelmäßige Bestimmung des FLs und des wFLs und der zugehörigen Steuergröße und/oder die regelmäßige Berechnung der optimierten Steuergröße für den energieeffizienten Betrieb des Fahrzeugverbandes genutzt werden. Das regelmäßig aktualisierte Kennfeld und/oder die regelmäßig berechnete optimierte Steuergröße können die Steuereinheit dazu befähigen, den FL und wFL während des Betriebes zu minimieren und zu einem energieeffizienten Betrieb des Fahrzeugverbandes zu führen.

Die Bestimmungseinheit kann den FL und/oder den wFL messen oder aufgrund von Daten wenigstens eines Sensors des Fahrzeuges und/oder des wenigstens einen weiteren Fahrzeuges berechnen.

Der Sensor kann beispielsweise ein in dem Fahrzeug vorhandener Sensor sein, beispielsweise ein Beschleunigungssensor und/oder ein Sensor zur Ermittlung des Verbrauches des Fahrzeuges während des Betriebes. Beispielsweise kann der Sensor dem Fahrzeug zum Betreiben der Steuervorrichtung hinzugefügt werden, sodass ein ordnungsgemäßer Betrieb innerhalb des Fahrzeugverbandes sichergestellt werden kann.

Die Bestimmungseinheit kann jeweils zum Bestimmen des FLs und/oder des wFLs ausgebildet sein und diese mittels Daten unterschiedlicher Quellen bestimmen. Diese Daten können jeweils das Messen des FLs und/oder des wFLs umfassen und/oder das Erfassen von Daten von Sensoren des Fahrzeuges, wobei die gemessenen und/oder erfassten Daten zum ermitteln des FLs und/oder des wFLs genutzt werden können.

Die Steuergröße (oder die optimierte Steuergröße) kann wenigstens einen Längsabstand des Fahrzeugs und/oder des wenigstens einen weiteren Fahrzeugs zueinander und/oder einen Querversatz des Fahrzeugs und/oder des wenigstens einen weiteren Fahrzeugs zueinander umfassen. Beispielsweise kann die Steuergröße (oder die optimierte Steuergröße) einen Satz oder Vektor mit Sollwerten zu jedem Fahrzeug des Fahrzeugverbandes umfassen. Ferner kann die Steuergröße eine Fahrgeschwindigkeit des Fahrzeuges und/oder des wenigstens einen weiteren Fahrzeugs und/oder des Fahrzeugverbandes umfassen. Alternativ oder ergänzend kann die Steuergröße ein Fahrniveau und/oder eine Stellung (oder Orientierung) eines Aerodynamikelements (beispielsweise einer Luftleitfläche an der Außenhaut, vorzugsweise eines Dachs des Fahrerhauses) des Fahrzeuges und/oder des wenigstens einen weiteren Fahrzeugs umfassen.

Alternativ oder ergänzend kann die Steuergröße einen Längsabstand des oder jedes weiteren Fahrzeugs relativ zum Fahrzeug umfassen.

Alternativ oder ergänzend kann die Steuergröße einen Querversatz des Fahrzeugs relativ zu dem oder jedem weiteren Fahrzeug umfassen. Alternativ oder ergänzend kann die Steuergröße einen Querversatz des oder jedes weiteren Fahrzeugs relativ zum Fahrzeug umfassen.

Der Querversatz kann ein relativer Querversatz zwischen dem Fahrzeug und dem wenigstens einen weiteren Fahrzeug sein. Alternativ oder ergänzend kann der Querversatz ein Querversatz des Fahrzeugs und/oder des wenigstens einen weiteren Fahrzeugs relativ zu einer Fahrbahn sein, beispielsweise der Fahrbahnmarkierung.

Der Längsversatz kann ein Abstand zwischen dem Fahrzeug und dem wenigstens einen weiteren Fahrzeug sein. Beispielsweise kann der Längsabstand ein Längsversatz abzüglich einer Fahrzeuglänge sein.

Das wenigstens eine weitere Fahrzeug kann ein im Fahrzeugverband dem Fahrzeug (vorzugsweise unmittelbar) vorausfahrendes weiteres Fahrzeug und/oder ein im Fahrzeugverband dem Fahrzeug (vorzugsweise unmittelbar) nachfahrendes weiteres Fahrzeug umfassen.

Die Fahrgeschwindigkeit (beispielsweise eine Bewegungsgeschwindigkeit relativ zur Straße) kann eine Geschwindigkeit der Fortbewegung des Fahrzeuges und/oder des wenigstens einen weiteren Fahrzeuges und/oder des Fahrzeugverbandes über der Fahrbahn umfassen. Beispielsweise kann die Fahrgeschwindigkeit angeben, wie viel Strecke pro Zeiteinheit jeweils zurückgelegt wird, vorzugsweise in Kilometern pro Stunde.

Das Fahrniveau kann beispielsweise den Abstand eines Fahrzeugaufbaus des Fahrzeuges und/oder des wenigstens einen weiteren Fahrzeuges zu der Fahrbahn und/oder eine Anpassung eines Rades und/oder mehrerer Räder des Fahrzeuges und/oder des wenigstens einen weiteren Fahrzeuges an eine Charakteristik (vorzugsweise Unebenheit) der Fahrbahn umfassen.

Das Aerodynamikelement kann beispielsweise den Luftwiderstand des Fahrzeuges und/oder des wenigstens einen weiteren Fahrzeuges und/oder die Umströmung (oder Umströmungscharakteristik) des Fahrzeuges und/oder des wenigstens einen weiteren Fahrzeuges beeinflussen. Dabei kann das Aerodynamikelement beispielsweise ein Spoiler oder ein Anbau beziehungsweise Aufbau des Fahrzeuges und/oder des wenigstens einen weiteren Fahrzeuges umfassen. Das Aerodynamikelement kann konfigurierbar (beispielsweise hinsichtlich seiner Orientierung steuerbar) sein, vorzugsweise während einer Bewegung oder eines Betriebes des Fahrzeuges und/oder des wenigstens einen weiteren Fahrzeuges.

Die Steuergröße kann zum Steuern oder Regeln des Fahrzeuges und/oder des wenigstens einen weiteren Fahrzeuges verwendet werden. Beispielsweise kann eine Anordnung und/oder Geschwindigkeit des Fahrzeugs und/oder des wenigstens einen weiteren Fahrzeugs relativ zueinander gesteuert oder geregelt werden und/oder eine Anordnung und/oder Geschwindigkeit des Fahrzeugs und/oder des wenigstens einen weiteren Fahrzeugs kann jeweils gesteuert oder geregelt werden. Dabei kann die Steuerung von der Steuergröße beeinflusst werden und das Ausmaß der Steuerung (beispielsweise eine Abweichung zwischen Sollwert und Istwert der Steuergröße) angeben.

Die Speichereinheit kann ferner dazu ausgebildet sein, vor dem Speichern eine Abweichung zwischen einerseits dem bestimmten FL und wFL und andererseits dem im Kennfeld in Zuordnung zu der variierten Steuergröße gespeicherten FL und wFL zu berechnen. Die Recheneinheit kann dazu ausgebildet sein, die optimierte Steuergröße zu berechnen, falls (beispielsweise nur falls oder erst dann wenn) die Abweichung kleiner als ein Schwellwert ist.

Die Abweichung (beispielsweise beim Speichern in Zuordnung zu vielen verschiedenen Werten der Steuergröße) kann ein Maß für die Genauigkeit des bereits gespeicherten Kennfelds sein. Der Schwellwert kann ein Grenzwert für ein Überschreiten und/oder ein Unterschreiten der betragsmäßigen Abweichung sein. Demnach kann ein Überschreiten und/oder Unterschreiten zu einer Reaktion des Systems, beispielsweise der Speichereinheit und/oder der Steuervorrichtung führen.

Unterschreitet die Abweichung den Schwellwert kann das Kennfeld zur Berechnung der optimierten Steuergröße hinreichend genau sein. Optional berechnet die Speichereinheit mehrere Abweichungen zwischen einerseits dem bestimmten FL und wFL und andererseits den im Kennfeld gespeicherten FL und wFL, die in Zuordnung zu Steuergrößen gespeichert sind, die zur aus der Variation resultierenden Steuergröße benachbart sind.

Die Speichereinheit kann ferner dazu ausgebildet sein, vor dem Speichern eine Abweichung zwischen einerseits dem bestimmten FL und wFL und andererseits dem im Kennfeld in Zuordnung zu der variierten Steuergröße gespeicherten FL und wFL zu berechnen. Die Steuereinheit kann dazu ausgebildet sein, die Variation der Steuergröße fortzusetzen, falls (beispielsweise nur falls oder erst dann wenn) die Abweichung größer als ein oder gleich einem Schwellwert ist, beispielsweise größer als oder gleich dem vorgenannten Schwellwert.

Die Steuervorrichtung kann ferner eine Kommunikationseinrichtung umfassen, die dazu ausgebildet ist die Steuergröße und/oder die optimierte Steuergröße an das weitere Fahrzeug im Fahrzeugverband zu senden und/oder den wFL vom weiteren Fahrzeug im Fahrzeugverband zu empfangen. Optional ist die Steuervorrichtung im Fahrzeug im Fahrzeugverband implementiert. Alternativ oder ergänzend ist die Kommunikationseinrichtung dazu ausgebildet, die Steuergröße und/oder die optimierte Steuergröße von einer Datenverarbeitungsvorrichtung außerhalb des Fahrzeugverbandes an das Fahrzeug und das weitere Fahrzeug im Fahrzeugverband zu senden und/oder den FL vom Fahrzeug und den wFL vom weiteren Fahrzeug im Fahrzeugverband zu empfangen. Optional ist die Steuervorrichtung in der Datenverarbeitungsvorrichtung außerhalb des Fahrzeugverbandes implementiert.

Die Kommunikationseinrichtung und/oder die Datenkommunikationseinrichtung kann zum Übermitteln von Informationen ausgebildet sein, wobei vorzugsweise digitale Daten übermittelt werden. Dabei kann die Kommunikationseinrichtung die Daten unter anderem über eine kabelgebundene oder eine kabellose Übertragungsschnittstelle übertragen.

Die Datenverarbeitungsvorrichtung kann zum Verarbeiten und oder zum Bearbeiten von digitalen Daten ausgebildet sein, wobei sie beispielsweise ein Computer oder ein Microcomputer sein kann, welcher als ein Digitalrechner oder ein Hybridrechner ausgebildet ist.

Die Kommunikationseinrichtung kann die Fahrzeuge des Fahrzeugverbandes dazu befähigen, dass die Fahrzeuge von jeweils einem Fahrzeug des Fahrzeugverbandes und/oder von der Datenverarbeitungsvorrichtung gesteuert oder ferngesteuert werden. Dabei kann jeweils ein Fahrzeug mit den anderen Fahrzeugen oder ein Fahrzeug für alle Fahrzeuge mit der Datenverarbeitungsvorrichtung oder alle Fahrzeuge mit der Datenverarbeitungsvorrichtung kommunizieren.

Die von der Recheneinheit berechnete optimierte Steuergröße ist dazu ausgebildet, das Fahrzeug mittels der Längs- und/oder Querführung zu dem wenigstens einen weiteren Fahrzeug derart auszurichten, dass ein von dem FL und dem wFL gebildeter Mittelwert minimal ist.

Der Mittelwert kann gewichtet sein. Beispielsweise kann ein Gewicht des gewichteten Mittelwerts von einer Antriebsleistung oder einem Wirkungsgrad eines Antriebs des jeweiligen Fahrzeugs abhängen.

Der Mittelwert kann ein arithmetisches Mittel sein, das wenigstens von dem FL und dem wFL gebildet ist. Alternativ oder ergänzend kann die optimierte Steuergröße eine Summe des FLs und des wenigstens einen wFLs minimieren oder reduzieren.

Die Recheneinheit kann dazu ausgebildet sein, einen gesamten Luftwiderstand des Fahrzeugverbandes zu bestimmen. Die Recheneinheit kann die optimierte Steuergröße zur Reduktion oder Minimierung des gesamten Luftwiderstands berechnen. Die Steuerung aller Fahrzeuge des Fahrzeugverbandes gemäß der optimierten Steuergröße kann die Energieeffizienz des gesamten Fahrzeugverbandes optimieren.

Die Speichereinheit kann ein neuronales Netz umfassen, welches das Kennfeld repräsentiert. Die Recheneinheit kann dazu ausgebildet sein, die den FL und den wFL optimierende Steuergröße mittels des neuronalen Netzes zu berechnen.

Das neuronale Netz kann beispielsweise ein künstliches neuronales Netz sein, welches das Berechnen der optimierten Steuergröße unterstützen oder ausführt. Beispielsweise kann die Recheneinheit dazu ausgebildet sein, das neuronale Netz dahingehend zu trainieren, die optimierte Steuergröße zu berechnen. Die Recheneinheit kann dazu ausgebildet sein, das neuronale Netz bei der Nutzung (z.B. bei der Variation der Steuergröße) des Fahrzeugverbandes zur Berechnung der optimieren Steuergröße zu trainieren.

Die Steuervorrichtung kann außerhalb des Fahrzeugs und/oder des wenigstens einen weiteren Fahrzeugs angeordnet sein. Die Steuervorrichtung kann ferner eine Datenkommunikationseinrichtung umfassen, die dazu ausgebildet ist, Daten zur Bestimmung des FL und des wFL zu empfangen, mittels derer die Bestimmungseinheit den FL und den wFL bestimmt. Die Steuereinheit kann die Steuergröße mittels der Datenkommunikationseinrichtung zur Längs- und/oder Querführung des Fahrzeugs und/oder des wenigstens einen weiteren Fahrzeugs im Fahrzeugverband an das Fahrzeug und/oder das wenigstens eine weitere Fahrzeug senden.

Eine außerhalb des Fahrzeuges angeordnete Steuervorrichtung kann beispielsweise zum zentralen Steuern eines oder mehrerer Fahrzeugverbände ausgebildet sein, wobei jedes Fahrzeug des einen oder der mehreren Fahrzeugverbände gesteuert werden kann. Dabei kann beispielsweise jeweils die wenigstens eine Steuergröße zwischen der Steuervorrichtung und dem jeweiligen Fahrzeug übertragen werden.

Die Recheneinheit kann in einem Rechennetzwerk oder Cloudserver implementiert sein.

Das Rechennetzwerk kann beispielsweise ein oder mehrere Computer aufweisen, welche unter anderem als Server ausgebildet sein können. Der jeweilige Server kann eine Schnittstelle zur Kommunikation mit dem Fahrzeug oder dem weiteren Fahrzeug des Fahrzeugverbandes aufweisen. Beispielweise kann das Rechennetzwerk einen oder mehrerer Cloudserver umfassen.

Das Rechennetzwerk kann die Steuervorrichtung unterstützen beispielsweise bei der Berechnung der optimierten Steuergröße und der Anpassung des Kennfeldes. Weiterhin kann das Rechennetzwerk eine Einbeziehung von weiteren Einflussgrößen auf den Betrieb des Fahrzeugverbandes ermöglichen und/oder begünstigen. Dabei können die weiteren Einflussgrößen beispielsweise Wetterdaten und/oder geographische Daten unter anderem der Fahrbahn sein.

Die Recheneinheit kann die optimierte Steuergröße aufgrund des FL und des wFL zur Minimierung einer Antriebsleistung des Fahrzeuges und des wenigstens einen weiteren Fahrzeuges berechnen.

Die Optimierung der Antriebsleistung kann beispielsweise zum Steigern der Energieeffizienz des Fahrzeugverbandes genutzt werden, wobei mittels des Reduzierens des FLs und/oder des wFLs eine möglichst optimale Antriebsleistung für das Fahrzeug und das wenigstens eine weitere Fahrzeug bestimmbar ist.

Die Steuereinheit kann dazu ausgebildet sein, die Steuergröße der Längs- und/oder Querführung des Fahrzeugs und/oder des wenigstens einen weiteren Fahrzeugs im Fahrzeugverband zu regeln. Die Steuergröße kann eine Regelgröße sein.

Die Steuereinheit kann dazu ausgebildet sein, das Fahrzeug und/oder das wenigstens eine weitere Fahrzeug regelnd zueinander auszurichten, wobei kontinuierlich oder regelmäßig die Regelgröße zur Ausrichtung abgeglichen wird und so etwaige Störungen ausgeglichen werden können.

Die Steuervorrichtung kann im Fahrzeug und/oder in wenigstens einem weiteren Fahrzeug angeordnet sein und dazu ausgebildet sein, mehrere Fahrzeuge oder alle Fahrzeuge des Fahrzeugverbandes zu steuern und/oder zu regeln. Das eine Fahrzeug kann beispielsweise zum Steuern der Längs- und/oder Querführung des wenigstens einen weiteren Fahrzeuges mittels der Steuervorrichtung ausgebildet sein.

Die Speichereinheit kann dazu ausgebildet sein, den im Zustand der variierten Steuergröße bestimmten FL und wFL im Kennfeld in Zuordnung zu der variierten Steuergröße und wenigstens einem Parameter zu speichern. Der Parameter kann den FL und/oder den wFL beeinflussen, ohne von der Steuereinheit gesteuert zu sein. Beispielsweise kann der Parameter eine Windgeschwindigkeit und/oder eine Fahrzeuggeometrie umfassen.

Gemäß einem weiteren Aspekt ist ein Fahrzeug, insbesondere Nutzfahrzeug, das zur Längs- und/oder Querführung in einem Fahrzeugverband mit zwei oder mehr Fahrzeugen ausgebildet ist, bereitgestellt. Das Fahrzeug kann eine Steuervorrichtung zur Längs- und/oder Querführung des Fahrzeugs gemäß einem der vorgenannten Aspekte umfassen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines exemplarischen Fahrzeugverbandes mit zwei Fahrzeugen, von denen wenigstens eines ein Ausführungsbeispiel der Steuervorrichtung umfasst;
- Figur 2: eine schematische Darstellung eines exemplarischen Fahrzeugverbandes mit zwei Fahrzeugen sowie einer Steuervorrichtung außerhalb der Fahrzeuge zum Steuern der zwei Fahrzeuge; und
- Figur 3: ein Ablaufdiagramm eines beispielshaften Betriebes der erfindungsgemäßen Steuervorrichtung.

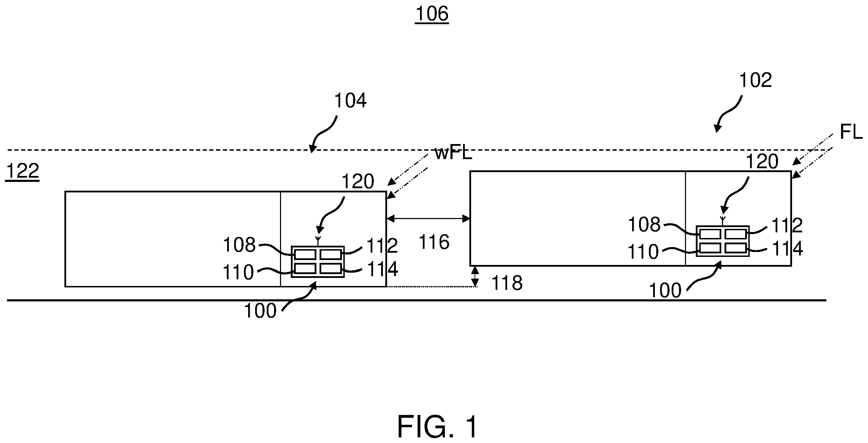

Die Figur 1 zeigt ein erstes Ausführungsbeispiel einer Steuervorrichtung, die allgemein mit dem Bezugszeichen 100 bezeichnet ist. Die Figur 1 zeigt einen Fahrzeugverband 106 schematisch, der aus einem Fahrzeug 102 und wenigstens einem weiteren Fahrzeug 104 gebildet ist. Das wenigstens eine weitere Fahrzeug 104 ist dem Fahrzeug 102 jeweils durch einen Längsabstand 116 und einem Querabstand 118 folgend angeordnet.

Das Fahrzeug 102 und das wenigstens eine weitere Fahrzeug 104 weisen jeweils die Steuervorrichtung 100 auf. Alternativ kann nur eines der Fahrzeuge im Fahrzeugverband ein Ausführungsbeispiel der Steuervorrichtung 100 umfassen. Dabei umfasst die jeweilige Steuervorrichtung 100 eine Bestimmungseinheit 108, eine Steuereinheit 110, eine Speichereinheit 112 und eine Recheneinheit 114 sowie eine Kommunikationseinrichtung 120. Die Kommunikationseinrichtung 120 ermöglicht eine Kommunikation der Steuervorrichtung 100 des Fahrzeugs 102 mit der Steuervorrichtung 100 des wenigstens einen weiteren Fahrzeugs 104.

Ferner wirkt auf das Fahrzeug 102 ein Fahrzeug-Luftwiderstand, FL, und auf das Fahrzeug 104 wirkt ein weiterer Fahrzeug-Luftwiderstand, wFL, der dem Betrieb (d.h. dem Fahrbetrieb) des Fahrzeuges 102 und des wenigstens einen weiteren Fahrzeuges 104 entgegenwirkt.

An der Kommunikationseinrichtung 120 kann ein Funkmodem, ein Antennenverstärker und eine Antenne angeschlossen sein, beispielsweise gemäß einer Funkzugangstechnologie des 3GPPs, insbesondere gemäß "Long Term Evolution" (LTE) oder "New Radio" (NR). Die Radiokommunikation über die Kommunikationseinrichtung 120 kann eine direkte Funkverbindung von Fahrzeug zu Fahrzeug (englisch: vehicle-to-vehicle oder V2V) sein, optional mit einem Steuerkanal zu einer Basisstation, insbesondere gemäß 3GPP Licensed-Assisted Access (LAA).

Ferner steht die Steuervorrichtung 100 des Fahrzeuges 102 mit der Kommunikationseinrichtung 120 des Fahrzeuges 102 in Signalaustausch und ist dazu ausgebildet, in einem Betrieb eines Fahrzeugverbandes 106 Signale zur Längs- und/oder Querführung von dem Fahrzeug 102 an ein weiteres Fahrzeug, beispielsweise das wenigstens eine weitere Fahrzeug 104, zu kommunizieren. Alternativ steht die Steuervorrichtung 100 des wenigstens einen weiteren Fahrzeuges 104 mit der Kommunikationseinrichtung 120 wenigstens einen weiteren Fahrzeuges 104 in Signalaustausch und ist dazu ausgebildet, in einem Betrieb eines Fahrzeugverbandes 106 Signale zur Längs- und/oder Querführung von dem wenigstens einen weiteren Fahrzeug 104 an ein weiteres Fahrzeug, beispielsweise das Fahrzeug 102, zu kommunizieren.

Der Fahrzeugverband 106 wird mittels der Steuervorrichtung 100 des Fahrzeuges 102 oder des wenigstens einen weiteren Fahrzeugs 104 in einem Längs- und/oder Querführungsbetrieb auf einer Fahrbahn 122 bewegt und der Längsabstand 116 und/oder der Querabstand 118 werden von der Steuereinheit 110 gesteuert.

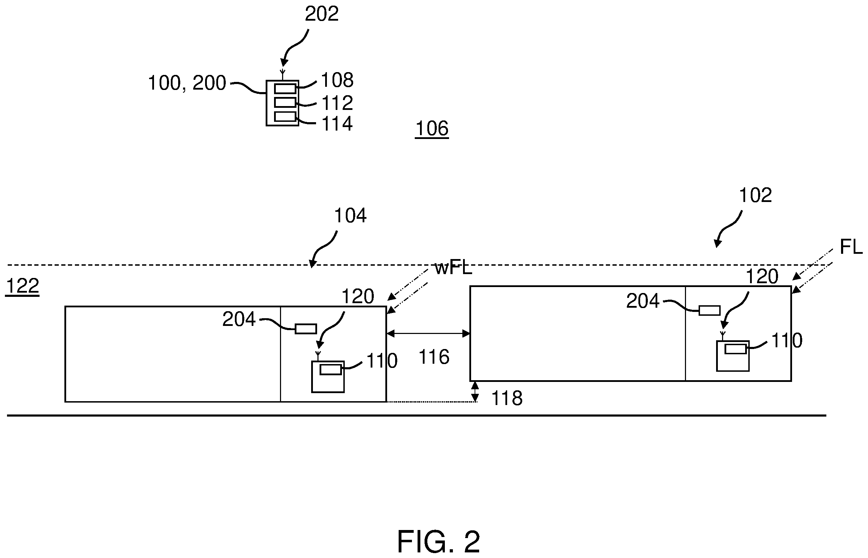

Die Figur 2 zeigt ein weiteres Ausführungsbeispiel einer Steuervorrichtung 100, die allgemein mit dem Bezugszeichen 100 bezeichnet ist. Die Figur 1 zeigt einen Fahrzeugverband 106 schematisch, der aus einem Fahrzeug 102 und wenigstens einem weiteren Fahrzeug 104 gebildet ist. Das wenigstens eine weitere Fahrzeug 104 ist dem Fahrzeug 102 jeweils durch einen Längsabstand 116 und einem Querabstand 118 folgend angeordnet.

Das Fahrzeug 102 und das wenigstens eine weitere Fahrzeug 104 weisen jeweils eine Steuereinheit 110, eine Kommunikationseinrichtung 120 und einen Sensor 204 auf. Dabei ist die Steuereinheit 110 des Fahrzeuges 102 und des wenigstens einen weiteren Fahrzeuges 104 dazu ausgebildet, einen Längs- und/oder Querführungsbetrieb des Fahrzeugverbandes 106 durchzuführen.

Ferner wirkt auf das Fahrzeug 102 ein Fahrzeug-Luftwiderstand, FL, und auf das Fahrzeug 104 wirkt ein weiterer Fahrzeug-Luftwiderstand, wFL, der dem Betrieb (d.h. dem Fahrbetrieb) des Fahrzeuges 102 und des wenigstens einen weiteren Fahrzeuges 104 entgegenwirkt.

Die Steuereinheit 110 und/oder der Sensor 204 des Fahrzeuges 102 und des wenigstens einen weiteren Fahrzeuges 104 stehen mit den jeweiligen Kommunikationseinrichtungen 120 in Signalaustausch und sind mittels der jeweiligen Kommunikationseinrichtungen 120 dazu ausgebildet, um mit einer Datenkommunikationseinrichtung 202 einer Datenverarbeitungsvorrichtung 200, welche als die Steuervorrichtung 100 ausgebildet ist, außerhalb des Fahrzeugverbandes 106 zu kommunizieren.

Die Datenverarbeitungsvorrichtung 200 umfasst jeweils eine Bestimmungseinheit 108, eine Steuereinheit 110 und eine Recheneinheit 114 und ist dazu ausgebildet, um Steuergrößen des Fahrzeuges 102 und/oder des wenigstens einen weiteren Fahrzeuges 104 in ein Kennfeld zu speichern und den FL und des wFL zu bestimmen und/oder zu variieren. Die Datenverarbeitungsvorrichtung 200 kann dazu unter anderem ein neuronales Netz nutzen und/oder auf Algorithmen der künstlichen Intelligenz oder des maschinellen Lernens zurückgreifen.

Der Fahrzeugverband 106 wird mittels der Datenverarbeitungsvorrichtung 200 in einem Längs- und/oder Querführungsbetrieb auf einer Fahrbahn 122 bewegt und der Längsabstand 116 und/oder der Querabstand 118 werden von der Datenverarbeitungsvorrichtung 200 gesteuert. Alternativ kann die Datenverarbeitungsvorrichtung 200 dazu ausgebildet sein, um den Fahrzeugverband zu regeln beziehungsweise den Längsabstand 116 und/oder den Querabstand 118 des Fahrzeugs 102 zu dem wenigstens einen weiteren Fahrzeug 104 zu regeln.

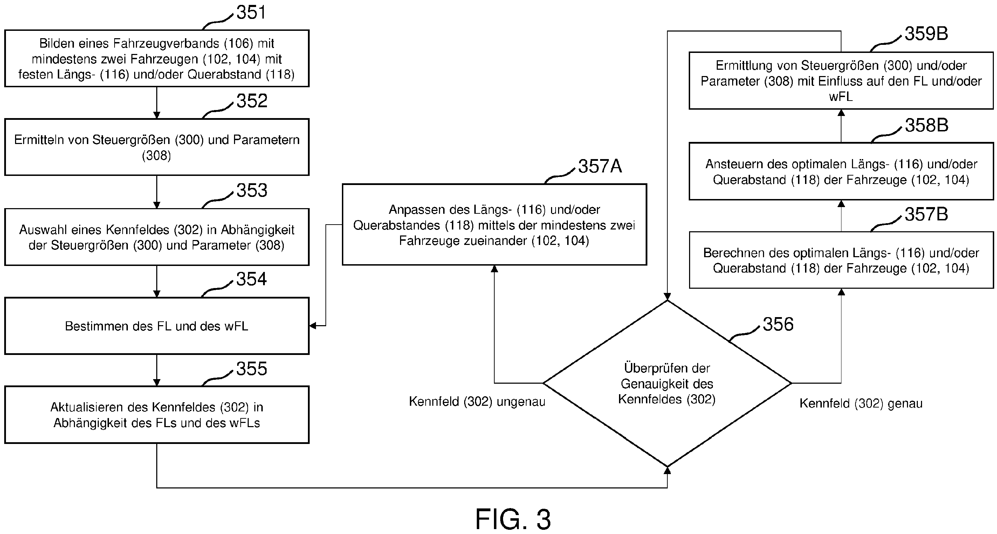

Die Figur 3 zeigt einen beispielshaften Ablauf eines Betriebes der erfindungsgemäßen Steuervorrichtung in einem Fahrzeugverband 106 zum Ansteuern eines energetisch optimalen Betriebes des Fahrzeugverbandes 106 mit nachfolgenden Schritten.

In einem ersten Schritt 351 wird der Fahrzeugverband 106 aus mindestens einem Fahrzeug 102 und wenigstens einem weiteren Fahrzeug 104 gebildet. Dabei wird das Fahrzeug 102 mittels eines vorgegeben Längsabstandes 116 und eines vorgegebenen Querabstandes 118 zueinander angeordnet.

In einem zweiten Schritt 352 wird wenigstens eine Steuergröße 300 und/oder wenigstens ein Parameter 308 bestimmt, welche und/oder welcher einen Fahrzeug-Luftwiderstand, FL, des Fahrzeuges 102 und/oder einen weiterer Fahrzeug-Luftwiderstand, wFL, des wenigstens einen weiteren Fahrzeuges 104 beeinflusst. Dabei können vorhandene Sensoren 204 des Fahrzeuges 102 und/oder des wenigstens einen weiteren Fahrzeuges 104 verwendet werden und/oder weitere Sensoren an dem Fahrzeug 102 und/oder dem wenigstens einen weiteren Fahrzeug 104 angeordnet werden.

In einem dritten Schritt 353 wird ein Kennfeld 302 aufgrund der wenigstens einen Steuergröße 300 und/oder des wenigstens einen Parameters 308 ausgewählt, wobei das Kennfeld 302 die Abhängigkeit des FLs und/oder des wFLs zu der wenigstens einen Steuergröße 300 und/oder des wenigstens einen Parameters 308 beschreibt.

In einem vierten Schritt 354 wird der FL und/oder der wFL aufgrund der wenigstens einen Steuergröße 300 und/oder des wenigstens einen Parameters 308 bestimmt.

In einem fünften Schritt 355 wird das Kennfeld 302 aufgrund der im vierten Schritt 354 bestimmten FL und wFL aktualisiert, beispielsweise kann das FL und/oder das wFL in das Kennfeld 302 mittels einer Speichereinheit 112 gespeichert werden. Dabei wird wenigstens eine optimierte Steuergrößen 304 aus dem Kennfeld abgeleitet.

In einem sechsten Schritt 356 wird die Genauigkeit des Kennfeldes 302 beziehungsweise des FL und/oder des wFL in Bezug zu der wenigstens einen Steuergröße 300 geprüft, wobei die wenigstens eine Steuergröße 300 beispielsweise zum Steuern des Längsabstandes 116 und/oder des Querabstandes 118 des Fahrzeuges 102 zu dem wenigstens einen weiteren Fahrzeug 104 ausgebildet ist. Dabei wird die Abweichung des aktuellen Längsabstandes 116 und/oder des aktuellen Querabstandes 118 zu der wenigstens einen Steuergröße 300 berechnet und mittels eines Schwellwertes 306 vergleichen, wobei bei einem unterschreiten des Schwellwertes ein A-Zweig und bei einem überschreiten des Schwellwertes ein B-Zweig des beispielhaften Ablaufes durchlaufen wird.

In einem weiteren Schritt 357A wird beim Feststellen eines ungenauen Kennfeldes die Anordnung oder Reihung des Fahrzeuges 102 zu dem wenigstens einen weiteren Fahrzeuges 104 in Bezug auf beispielsweise den Längsabstand 116, den Querabstand 118, eine Bewegungsgeschwindigkeit, ein Fahrniveau und/oder ein Aerodynamikelement durch Variation der beeinflussbaren Größen angepasst. Im Anschluss daran wird zu dem vierten Schritt 354 zurück gesprungen.

In einem weiteren ersten Schritt 357B wird beim Feststellen eines genauen Kennfeldes versucht, wenigstens eine energetisch optimierte Steuergrößen 304 für den Längsabstand 116 und/oder den Querabstand 118 zu berechnen, wobei die wenigstens eine energetisch optimierte Steuergröße 304 zum Anordnen des Fahrzeuges 102 zu dem wenigstens einen weiteren Fahrzeug 104 derart ausgebildet ist, dass ein Mittelwert aus FL und wFL gesenkt vorzugsweise minimiert wird.

In einem weiteren zweiten Schritt 358B wird der Längsabstand 116 und/oder der Querabstand 118 des Fahrzeuges 102 zu dem wenigstens einen weiteren Fahrzeug 104 aufgrund der wenigstens einen energetisch optimierten Steuergröße 304 angepasst.

In einem weiteren dritten Schritt 359B wird die Steuergröße 300 und/oder wenigstens ein Parameter 308 bestimmt und in das Kennfeld 300 gespeichert. Im Anschluss daran wird zum sechsten Schritt 356 zurück gesprungen.

Alternativ kann der beispielshafte Ablauf zum Betreiben der erfindungsgemäßen Steuervorrichtung in einem Fahrzeugverband 106 zum Ansteuern eines energetisch optimalen Betriebes des Fahrzeugverbandes 106 wie folgt beschrieben werden.

Zunächst wird aus wenigstens zwei Fahrzeugen 102, 104 ein Fahrzeugverband 106 gebildet. Dabei werden feststehende, initiale Fahrzeugabstände umfassend einen Längsabstand 116 und einen Querabstand 118 eingestellt. Anschließend werden nicht beeinflussbare Größen, die einen Einfluss auf einen Fahrzeug-Luftwiderstand, FL, des Fahrzeuges 102 und/oder einen weiterer Fahrzeug-Luftwiderstand, wFL, des wenigstens einen weiteren Fahrzeuges 104 haben, bestimmt.

Nicht beeinflussbare Größen umfassen, beispielsweise, die Anordnung oder Reihung der zwei Fahrzeuge 102, 104, eine unterschiedliche Fahrzeuggeometrie der zwei Fahrzeuge 102, 104, wobei sich die Zusammensetzung des Fahrzeugverbands 106 während der Fahrt ändern kann, wobei Ändern das Verlassen eines der zwei Fahrzeuge 102, 104 umfassen kann und/oder das Hinzufügen eines weiteren Fahrzeuges zu dem Fahrzeugverband 106. Nicht beeinflussbare Größen umfassen ferner Umgebungsbedingungen wie Steigung oder Gefälle der Fahrbahn 122, Kurvenradien, Windgeschwindigkeit oder Windrichtung. Dabei können Daten zur Windgeschwindigkeit oder Windrichtung aus externen Quellen, wie beispielsweise der Datenverarbeitungsvorrichtung 200 oder weiteren netzwerkfähigen Quellen, oder vorhandene und/oder angeordnete Quellen, wie beispielsweise Sensoren 204, verwendet werden.

Das Kennfeld 302 kann aus den nicht beeinflussbaren Größen und beeinflussbaren Größen (insbesondere den Fahrzeugabständen) gebildet werden, welche einen Einfluss auf den FL und/oder den wFL haben. Dazu wird im nächsten Schritt ein bereits hinterlegtes Kennfeld 302 ausgewählt, welches den FL und/oder den wFL in Abhängigkeit der aktuellen beeinflussbaren und nicht beeinflussbaren Größen am besten abbildet. Ein solches Kennfeld 302 kann im Fahrzeug 102, 104 oder auf der Datenverarbeitungsvorrichtung 200, wie beispielsweise einem Server oder einer Cloud, außerhalb des Fahrzeugs hinterlegt sein.

Die beeinflussbaren Größen können jeweils Fahrzeugabstände, wie den Längsabstand 116 und den Querabstand 118 und die Geschwindigkeit des Fahrzeugverbands 106 und/oder der einzelnen Fahrzeuge 102, 104 sowie weitere Größen, wie beispielsweise ein Fahrniveau der Fahrzeuge 102, 104 innerhalb des Fahrzeugverbands 106 oder aktive beziehungsweise während der Fahrt verstellbare Elemente, wie beispielsweise aerodynamische Elemente wie Dachspoiler, umfassen.

Nach der Auswahl eines ersten Kennfelds 302 wird der aktuelle FL und/oder wFL der Fahrzeuge 102, 104 berechnet und damit das bestehende Kennfeld 302 aktualisiert. Dieses Vorgehen wird so lange wiederholt, bis das Kennfeld 302 ausreichend genau bestimmt ist. Ein Kennfeld 302 gilt beispielsweise als ausreichend genau bestimmt, wenn sich nach einer bestimmten Anzahl von Kennfeldaktualisierungen keine signifikanten Änderungen im Kennfeld 302 mehr ergeben. Bevor der FL und/oder der wFL zur Aktualisierung des Kennfelds 302 erneut berechnet wird, erfolgt jeweils eine gezielte und automatische Variation der aktiv beeinflussbaren Größen. Anstelle des in der Abbildung beschriebenen Kennfelds 302 kann der Zusammenhang zwischen den Luftwiderständen der einzelnen Fahrzeuge und den beeinflussbaren beziehungsweise nicht beeinflussbaren Größen, beispielsweise auch mit Polynomfunktionen oder neuronalen Netzen dargestellt werden.

Sobald das Kennfeld 302 ausreichend genau ist, werden daraus die energetisch optimalen Fahrzeugabstände, wie der Längsabstand 116 und/oder der Querabstand 118, und weitere aktiv beeinflussbare Größen bestimmt und in dem Fahrzeugverband 106 eingestellt. Anschließend werden kontinuierlich die nicht beeinflussbaren Größen bestimmt und daraus entsprechend des geltenden Kennfelds 302 die optimalen Fahrzeugabstände, wie der Längsabstand 116 und/oder der Querabstand 118, eingestellt.

Die Ermittlung des FL und/oder des wFL während der Fahrt macht es möglich, im Rahmen einer energieeffizienten Steuerung des Fahrzeugverbands 102, auf die Veränderung nicht aktiv beeinflussbarer Größen zu reagieren.

Für die Bestimmung des FL und/oder des wFL kann die Steuervorrichtung 100 mittels der nachfolgenden Schritte vorgehen. In einem ersten Schritt wird eine aktuelle Antriebskraft eines der zwei und/oder der zwei Fahrzeuge 102, 104 aus aktuellen Fahrzeugdaten wie Kraftstoffverbrauch, Motordrehzahl, Motordrehmoment, Getriebeübersetzung, Verlustleistungskennfelder einzelner Komponenten wie Getriebe oder Differenzial, Leistungsbedarf von Nebenaggregaten bzw. Nebenverbrauchern des jeweiligen der zwei Fahrzeuge 102, 104 ermittelt. Dabei können diese Fahrzeugdaten vorzugsweise Daten sein, die dem jeweiligen der zwei Fahrzeuge 102, 104 zur Verfügung stehen und typischerweise über einen CAN-Bus übertragen werden. Alternativ können zur Bestimmung der Antriebskraft Daten wie Fahrzeugleergewicht sowie zugeladene Masse, geschätzte Fahrzeuggesamtmasse oder rotatorische Trägheiten des jeweiligen der zwei Fahrzeuge 102, 104 verwendet werden. In einem zweiten Schritt wird der Rollwiderstand eines der zwei und/oder der zwei Fahrzeuge 102, 104 aus der aktuellen Fahrzeugmasse, ggf. der Massenverteilung des jeweiligen der zwei Fahrzeuge 102, 104 und dem Rollwiderstandsbeiwert der Reifen ermittelt. Alternativ kann auch anstelle eines konstanten Rollwiderstandsbeiwerts eine Funktion, die beispielsweise die aktuelle Geschwindigkeit oder die entsprechenden Achslasten des jeweiligen der zwei Fahrzeuge 102, 104 berücksichtigt, zur Ermittlung des Rollwiderstandsbeiwerts verwendet werden. In einem dritten Schritt wird der Beschleunigungswiderstands eines der zwei und/oder der zwei Fahrzeuge 102, 104 aus der Fahrzeugmasse des jeweiligen der zwei Fahrzeuge 102, 104, der aktuellen Fahrzeugbeschleunigung sowie dem aktuellen Drehmassenzuschlagsfaktor, ermittelt. In einem vierten Schritt wird der Steigungswiderstand eines der zwei und/oder der zwei Fahrzeuge 102, 104 aus der Fahrzeugmasse des jeweiligen der zwei Fahrzeuge 102, 104 und einer aktuellen Steigung der Fahrbahn 122 bestimmt. Hierbei kann beispielsweise auf verfügbare Straßendaten des jeweiligen der zwei Fahrzeuge 102, 104, aus denen die aktuelle Steigung hervorgeht, zurückgegriffen werden. In Schritt fünf wird der FL und/oder der wFL gemäß folgender Gleichung bestimmt. Luftwiderstand = Antriebskraft - Rollwiderstand - Beschleunigungswiderstand - Steigungswiderstand

Die Berechnung des jeweiligen Luftwiderstands kann entweder einzeln in jedem der zwei Fahrzeuge 102, 104 oder gesammelt in einem der zwei Fahrzeuge 102, 104 erfolgen. Auch eine Berechnung auf einem Server beziehungsweise einer Cloud außerhalb der Fahrzeuge 102, 104, wie beispielsweise der Datenverarbeitungsvorrichtung 200, ist denkbar. Gleiches gilt für die Bestimmung der energetisch optimalen Fahrzeugabstände, welche den Längsabstand 116 und den Querabstand 118 umfassen. Die zwei Fahrzeuge 102, 104 sollten folglich über eine geeignete Kommunikationseinrichtung 120 verfügen, um relevante Informationen, wie beispielsweise die Steuergröße 300 und/oder die optimierte Steuergröße 304, austauschen zu können. Die Menge und Art der Informationen, die ausgetauscht werden müssen, hängt stark davon ab, wo die einzelnen Berechnungen zu den FL und/oder dem wFL und den energetisch optimalen Fahrzeugabständen stattfinden. Relevante Informationen können alle oben genannten aktiv bzw. nicht aktiv beeinflussbaren Größen mit Einfluss auf den FL und/oder dem wFL sowie alle zur Berechnung der Luftwiderstände notwendigen Daten sein.

Alternativ kann der Fahrzeugverband 106 Fahrzeuge aufweisen, welche zum Betreiben der erfindungsgemäßen Steuervorrichtung 100 nicht ausgebildet und/oder geeignet sind. Dabei kann nicht geeignet das Fehlen von Fahrzeugdaten, Sensoren oder Kommunikationsmöglichkeiten umfassen. Ferner kann der Fahrzeugverband 106 Fahrzeuge aufweisen welche ihre Längs- und/oder Querführung nicht nach den Vorgaben erfindungsgemäßen Steuervorrichtung 100 anpassen, beispielsweise aufgrund anderer fahrzeuginterner, energieeffizienter Fahrstrategien. Dabei kann die erfindungsgemäßen Steuervorrichtung 100 ausgebildet sein, nur einzelne Fahrzeuge 102, 104 des Fahrzeugverbands 106 zu steuern. Alternativ ist es vorstellbar, dass ein Fahrzeug 102, 104 nur den Längsabstand 116 und/oder den Querabstand 118 zu einem vorausfahrenden Fahrzeug basierend auf den FL und/oder den wFL anpasst. Im Zuge dieser Alternative ist das Empfangen von Daten zur Längs- und/oder Querführung der nicht steuerbaren Fahrzeuge zweckmäßig, wobei diese Daten beispielsweise Informationen zu der geplanten Geschwindigkeitstrajektorie der nicht steuerbaren Fahrzeuge umfassen.

Obwohl die Erfindung in Bezug auf exemplarische Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Anwendung der Brennkraftmaschine oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Steuervorrichtung
- 102: Fahrzeug
- 104: Weiteres Fahrzeug
- 106: Fahrzeugverband
- 108: Bestimmungseinheit
- 110: Steuereinheit
- 112: Speichereinheit
- 114: Recheneinheit
- 116: Längsabstand
- 118: Querabstand
- 120: Kommunikationseinrichtung
- 122: Fahrbahn
- 200: Datenverarbeitungsvorrichtung
- 202: Datenkommunikationseinrichtung
- 204: Sensor
- 300: Steuergröße
- 302: Kennfeld
- 304: optimierte Steuergröße
- 306: Schwellwert
- 308: Parameter
- 351: Bilden des Fahrzeugverbandes
- 352: Ermittlung der Einflussgrößen auf den FL und wFL
- 353: Auswahl eines Kennfeldes
- 354: Bestimmen der Luftwiderstände
- 355: Anpassen des Kennfeldes
- 356: Überprüfen des Kennfeldes
- 367A: Variation der Fahrzeugabstände
- 367B: Bestimmen optimaler Fahrzeugabstände
- 368B: Ansteuern der optimalen Fahrzeugabstände
- 369B: Ermittlung der Einflussgrößen auf den FL und wFL

## Patentansprüche

1. Steuervorrichtung (100) zur Längs- und/oder Querführung eines Fahrzeugs (102), insbesondere eines Nutzfahrzeugs, relativ zu wenigstens einem weiteren Fahrzeug (104) in einem Fahrzeugverband (106), umfassend:
- eine Bestimmungseinheit (108), die dazu ausgebildet ist, einen Fahrzeug-Luftwiderstand, FL, des Fahrzeugs (102) und einen weiteren Fahrzeug-Luftwiderstand, wFL, des wenigstens einen weiteren Fahrzeugs (104) zu bestimmen;
- eine Steuereinheit (110), die dazu ausgebildet ist, eine Steuergröße (300) der Längs- und/oder Querführung des Fahrzeugs (102) und/oder des wenigstens einen weiteren Fahrzeugs (104) im Fahrzeugverband (106) zu steuern;
- eine Speichereinheit (112), die dazu ausgebildet ist, den bestimmten FL und wFL in Zuordnung zu der gesteuerten Steuergröße (300) in einem Kennfeld (302) zu speichern,
wobei die Steuereinheit (110) dazu ausgebildet ist, die Steuergröße (300) zu variieren, die Bestimmungseinheit (108) dazu ausgebildet ist, den FL und den wFL im Zustand der variierten Steuergröße (300) zu bestimmen, und die Speichereinheit (112) dazu ausgebildet ist, den im Zustand der variierten Steuergröße (300) bestimmten FL und wFL im Kennfeld (302) in Zuordnung zu der variierten Steuergröße (300) zu speichern; und
- eine Recheneinheit (114), die dazu ausgebildet ist, auf Grundlage des gespeicherten Kennfelds (302) eine den FL und den wFL optimierende Steuergröße (304) zu berechnen,
wobei die Steuereinheit (110) ferner dazu ausgebildet ist, die Steuergröße (300) der Längs- und/oder Querführung des Fahrzeugs (102) und/oder des wenigstens einen weiteren Fahrzeugs (104) im Fahrzeugverband (106) gemäß der optimierten Steuergröße (304) zu steuern, und
wobei die von der Recheneinheit (114) berechnete optimierte Steuergröße (304) dazu ausgebildet ist, das Fahrzeug (102) mittels der Längs- und/oder Querführung zu dem wenigstens einen weiteren Fahrzeug (104) derart auszurichten, dass ein von dem FL und dem wFL gebildeter Mittelwert minimal ist.

2. Steuervorrichtung (100) nach Anspruch 1, **dadurch gekennzeichnet, dass** die Bestimmungseinheit (108) den FL und/oder den wFL misst oder aufgrund von Daten wenigstens eines Sensors (204) des Fahrzeuges (102) und/oder des wenigstens einen weiteren Fahrzeuges (104) berechnet.

3. Steuervorrichtung (100) nach einem der Ansprüche 1 oder 2, **dadurch gekennzeichnet, dass** die Steuergröße (300) wenigstens einen Längsabstand (116) des Fahrzeugs (102) und/oder des wenigstens einen weiteren Fahrzeugs (104) zueinander und/oder einen Querversatz (118) des Fahrzeugs (102) und/oder des wenigstens einen weiteren Fahrzeugs (104) zueinander und/oder eine Fahrgeschwindigkeit des Fahrzeugs (102) und/oder des wenigstens einen weiteren Fahrzeugs (104) und/oder ein Fahrniveau des Fahrzeugs (102) und/oder des wenigstens einen weiteren Fahrzeugs (104) und/oder eine Stellung eines Aerodynamikelements des Fahrzeugs (102) und/oder des wenigstens einen weiteren Fahrzeugs (104) umfasst.

4. Steuervorrichtung (100) nach einem der Ansprüche 1 bis 3, **dadurch gekennzeichnet, dass** die Speichereinheit (112) ferner dazu ausgebildet ist, vor dem Speichern eine Abweichung zwischen einerseits dem bestimmten FL und wFL und andererseits dem im Kennfeld in Zuordnung zu der variierten Steuergröße (300) gespeicherten FL und wFL zu berechnen, wobei die Recheneinheit (114) die optimierte Steuergröße (304) berechnet, falls die Abweichung kleiner als ein Schwellwert (306) ist.

5. Steuervorrichtung (100) nach einem der Ansprüche 1 bis 4, **dadurch gekennzeichnet, dass** die Speichereinheit (112) ferner dazu ausgebildet ist, vor dem Speichern eine Abweichung zwischen einerseits dem bestimmten FL und wFL und andererseits dem im Kennfeld in Zuordnung zu der variierten Steuergröße (300) gespeicherten FL und wFL zu berechnen, wobei die Steuereinheit (112) dazu ausgebildet ist, die Variation der Steuergröße (300) fortzusetzen, falls die Abweichung größer als ein oder gleich einem Schwellwert (306) ist.

6. Steuervorrichtung (100) nach einem der Ansprüche 1 bis 5, **dadurch gekennzeichnet, dass** die Steuervorrichtung (100) ferner eine Kommunikationseinrichtung (120; 202) umfasst, die dazu ausgebildet ist,
die Steuergröße (300) und/oder die optimierte Steuergröße (304) an das weitere Fahrzeug (104) im Fahrzeugverband zu senden und/oder den wFL vom weiteren Fahrzeug (104) im Fahrzeugverband zu empfangen, optional wobei die Steuervorrichtung (100) im Fahrzeug (102) im Fahrzeugverband implementiert ist; und/oder
die Steuergröße (300) und/oder die optimierte Steuergröße (304) von einer Datenverarbeitungsvorrichtung (200) außerhalb des Fahrzeugverbands an das Fahrzeug (102) und das weitere Fahrzeug (104) im Fahrzeugverband zu senden und/oder den FL vom Fahrzeug (102) und den wFL vom weiteren Fahrzeug (104) im Fahrzeugverband zu empfangen, optional wobei die Steuervorrichtung (100) in der Datenverarbeitungsvorrichtung (200) außerhalb des Fahrzeugverbands implementiert ist.

7. Steuervorrichtung (100) nach einem der Ansprüche 1 bis 6, **dadurch gekennzeichnet, dass** die Speichereinheit (112) ein neuronales Netz umfasst, welches das Kennfeld repräsentiert, und die Recheneinheit (114) dazu ausgebildet ist, die den FL und den wFL optimierende Steuergröße (304) mittels des neuronalen Netzes zu berechnen.

8. Steuervorrichtung (100) nach einem der Ansprüche 1 bis 7, **dadurch gekennzeichnet, dass** die Steuervorrichtung (100) außerhalb des Fahrzeugs (102) und/oder des wenigstens einen weiteren Fahrzeugs (104) angeordnet ist, wobei die Steuervorrichtung (100) ferner eine Datenkommunikationseinrichtung (202) umfasst, die dazu ausgebildet ist, Daten zur Bestimmung des FL und des wFL zu empfangen, mittels derer die Bestimmungseinheit (108) den FL und den wFL bestimmt, wobei die Steuereinheit (110) die Steuergröße (300) mittels der Datenkommunikationseinrichtung (202) zur Längs- und/oder Querführung des Fahrzeugs (102) und/oder des wenigstens einen weiteren Fahrzeugs (104) im Fahrzeugverband (106) an das Fahrzeug (102) und/oder das wenigstens eine weitere Fahrzeug (104) sendet.

9. Steuervorrichtung (100) nach Anspruch 8, wobei die Recheneinheit (114) in einem Rechennetzwerk oder Cloudserver implementiert ist.

10. Steuervorrichtung (100) nach einem der Ansprüche 1 bis 9, **dadurch gekennzeichnet, dass** die Recheneinheit (114) die optimierte Steuergröße (304) aufgrund des FL und des wFL berechnet zur Minimierung einer Antriebsleistung des Fahrzeuges (102) und des wenigstens einen weiteren Fahrzeuges (104).

11. Steuervorrichtung (100) nach einem der Ansprüche 1 bis 10, **dadurch gekennzeichnet, dass** die Steuereinheit (110) dazu ausgebildet ist, die Steuergröße (300) der Längs- und/oder Querführung des Fahrzeugs (102) und/oder des wenigstens einen weiteren Fahrzeugs (104) im Fahrzeugverband (106) zu regeln.

12. Steuervorrichtung (100) nach einem der Ansprüche 1 bis 11, **dadurch gekennzeichnet,** die Steuervorrichtung (100) im Fahrzeug (102) und/oder im wenigstens einen weiteren Fahrzeug (104) angeordnet ist und dazu ausgebildet ist, mehrere Fahrzeuge (102, 104) oder alle Fahrzeuge (102, 104) des Fahrzeugverbands (106) zu steuern und/oder zu regeln.

13. Steuervorrichtung (100) nach einem der Ansprüche 1 bis 12, **dadurch gekennzeichnet, dass** die Speichereinheit (112) dazu ausgebildet ist, den im Zustand der variierten Steuergröße (300) bestimmten FL und wFL im Kennfeld (302) in Zuordnung zu der variierten Steuergröße (300) und wenigstens einem Parameter (308) zu speichern, wobei der Parameter (308), vorzugsweise eine Windgeschwindigkeit und/oder eine Fahrzeuggeometrie, den FL und/oder den wFL beeinflusst ohne von der Steuereinheit (110) gesteuert zu sein.

14. Fahrzeug (102), insbesondere Nutzfahrzeug, das zur Längs- und/oder Querführung in einem Fahrzeugverband (106) mit zwei oder mehr Fahrzeugen ausgebildet ist, **dadurch gekennzeichnet, dass** das Fahrzeug (102) umfasst:
eine Steuervorrichtung (100) nach einem der Ansprüche 1 bis 13 zur Längs- und/oder Querführung des Fahrzeugs (102).

## Claims

1. A control apparatus (100) for the longitudinal and/or lateral guidance of a vehicle (102), in particular of a utility vehicle, relative to at least one further vehicle (104) in a vehicle group (106), comprising:
- a determination unit (108), which is configured to determine a vehicle air resistance, FL, of the vehicle (102) and a further vehicle air resistance, wFL, of the at least one further vehicle (104);
- a control unit (110), which is configured to control a control variable (300) of the longitudinal and/or lateral guidance of the vehicle (102) and/or of the at least one further vehicle (104) in the vehicle group (106);
- a memory unit (112), which is configured to store the determined FL and wFL in association with the controlled control variable (300) in a characteristic map (302),
wherein the control unit (110) is configured to vary the control variable (300), the determination unit (108) is configured to determine the FL and the wFL in the state of the varied control variable (300), and the memory unit (112) is configured to store the FL and wFL determined in the state of the varied control variable (300) in the characteristic map (302) in association with the varied control variable (300); and
- a computational unit (114), which is configured to calculate a control variable (304) optimizing the FL and the wFL on the basis of the stored characteristic map (302),
wherein the control unit (110) is further configured to control the control variable (300) of the longitudinal and/or lateral guidance of the vehicle (102) and/or of the at least one further vehicle (104) in the vehicle group (106) in accordance with the optimized control variable (304), and
wherein the optimized control variable (304) calculated by the computational unit (114) is configured to orient the vehicle (102) by means of the longitudinal and/or lateral guidance in relation to the at least one further vehicle (104) such that an average formed from the FL and the wFL is minimal.

2. The control apparatus (100) according to Claim 1, **characterized in that** the determination unit (108) measures the FL and/or the wFL or calculates the FL and/or the wFL on the basis of data from at least one sensor (204) of the vehicle (102) and/or of the at least one further vehicle (104).

3. The control apparatus (100) according to either of Claims 1 and 2, **characterized in that** the control variable (300) comprises at least a longitudinal distance (116) of the vehicle (102) and/or of the at least one further vehicle (104) in relation to one another and/or a lateral offset (118) of the vehicle (102) and/or of the at least one further vehicle (104) in relation to one another and/or a vehicle speed of the vehicle (102) and/or of the at least one further vehicle (104) and/or a driving level of the vehicle (102) and/or of the at least one further vehicle (104) and/or a setting of an aerodynamic element of the vehicle (102) and/or of the at least one further vehicle (104).

4. The control apparatus (100) according to any of Claims 1 to 3, **characterized in that** the memory unit (112) is furthermore configured to calculate, before the storing operation, a deviation between the determined FL and wFL on the one hand and the FL and wFL stored in the characteristic map in association with the varied control variable (300) on the other hand, wherein the computational unit (114) calculates the optimized control variable (304) if the deviation is less than a threshold value (306).

5. The control apparatus (100) according to any of Claims 1 to 4, **characterized in that** the memory unit (112) is furthermore configured to calculate, before the storing operation, a deviation between the determined FL and wFL on the one hand and the FL and wFL stored in the characteristic map in association with the varied control variable (300) on the other hand, wherein the control unit (112) is configured to continue the variation of the control variable (300) if the deviation is greater than or equal to a threshold value (306).

6. The control apparatus (100) according to any of Claims 1 to 5, **characterized in that** the control apparatus (100) furthermore comprises a communication device (120; 202), which is configured
to transmit the control variable (300) and/or the optimized control variable (304) to the further vehicle (104) in the vehicle group and/or to receive the wFL from the further vehicle (104) in the vehicle group, optionally wherein the control apparatus (100) is implemented in the vehicle (102) in the vehicle group; and/or
to transmit the control variable (300) and/or the optimized control variable (304) from a data processing apparatus (200) outside the vehicle group to the vehicle (102) and the further vehicle (104) in the vehicle group and/or to receive the FL from the vehicle (102) and the wFL from the further vehicle (104) in the vehicle group, optionally wherein the control apparatus (100) is implemented in the data processing apparatus (200) outside the vehicle group.

7. The control apparatus (100) according to any of Claims 1 to 6, **characterized in that** the memory unit (112) comprises a neural network representing the characteristic map and the computational unit (114) is configured to calculate the control variable (304) optimizing the FL and the wFL by means of the neural network.

8. The control apparatus (100) according to any of Claims 1 to 7, **characterized in that** the control apparatus (100) is arranged outside of the vehicle (102) and/or of the at least one further vehicle (104), wherein the control apparatus (100) furthermore comprises a data communication device (202), which is configured to receive data for determining the FL and the wFL, by means of which data the determination unit (108) determines the FL and the wFL, wherein the control unit (110) transmits the control variable (300) by means of the data communication device (202) for the longitudinal and/or lateral guidance of the vehicle (102) and/or of the at least one further vehicle (104) in the vehicle group (106) to the vehicle (102) and/or to the at least one further vehicle (104).

9. The control apparatus (100) according to Claim 8, wherein the computational unit (114) is implemented in a computational network or cloud server.

10. The control apparatus (100) according to any of Claims 1 to 9, **characterized in that** the computational unit (114) calculates the optimized control variable (304) on the basis of the FL and of the wFL to minimize a drive power of the vehicle (102) and of the at least one further vehicle (104).

11. The control apparatus (100) according to any of Claims 1 to 10, **characterized in that** the control unit (110) is configured to control the control variable (300) of the longitudinal and/or lateral guidance of the vehicle (102) and/or of the at least one further vehicle (104) in the vehicle group (106) in a closed loop.

12. The control apparatus (100) according to any of Claims 1 to 11, **characterized in that** the control apparatus (100) is arranged in the vehicle (102) and/or in the at least one further vehicle (104) and is configured to control a plurality of vehicles (102, 104) or all vehicles (102, 104) of the vehicle group (106) in an open and/or closed loop.

13. The control apparatus (100) according to any of Claims 1 to 12, **characterized in that** the memory unit (112) is configured to store the FL and wFL, determined in the state of the varied control variable (300), in the characteristic map (302) in association with the varied control variable (300) and at least one parameter (308), wherein the parameter (308), preferably a wind speed and/or a vehicle geometry, influences the FL and/or the wFL without being controlled by the control unit (110).

14. A vehicle (102), in particular a utility vehicle, configured for the longitudinal and/or lateral guidance in a vehicle group (106) of two or more vehicles, **characterized in that** the vehicle (102) comprises:
a control apparatus (100) according to any of Claims 1 to 13 for the longitudinal and/or lateral guidance of the vehicle (102).

## Revendications

1. Dispositif de commande (100) pour un guidage longitudinal et/ou transversal d'un véhicule (102), en particulier d'un véhicule utilitaire, par rapport à au moins un autre véhicule (104) dans un convoi de véhicules (106), comprenant :
- une unité de détermination (108) qui est réalisée pour déterminer une résistance de l'air de véhicule, FL, du véhicule (102) et une autre résistance de l'air de véhicule, wFL, dudit au moins un autre véhicule (104) ;
- une unité de commande (110) qui est réalisée pour commander une grandeur de commande (300) du guidage longitudinal et/ou transversal du véhicule (102) et/ou dudit au moins un autre véhicule (104) dans le convoi de véhicules (106) ;
- une unité de stockage (112) qui est réalisée pour stocker dans un diagramme caractéristique (302) la FL et la wFL déterminées en association avec la grandeur de commande (300) commandée,
dans lequel l'unité de commande (110) est réalisée pour modifier la grandeur de commande (300), l'unité de détermination (108) est réalisée pour déterminer la FL et la wFL à l'état de la grandeur de commande (300) modifiée, et l'unité de stockage (112) est réalisée pour stocker la FL et la wFL déterminées à l'état de la grandeur de commande (300) modifiée dans le diagramme caractéristique (302) en association avec la grandeur de commande (300) modifiée ; et
- une unité de calcul (114) qui est réalisée pour calculer sur la base du diagramme caractéristique (302) stocké une grandeur de commande (304) optimisant la FL et la wFL,
dans lequel l'unité de commande (110) est en outre réalisée pour commander la grandeur de commande (300) du guidage longitudinal et/ou transversal du véhicule (102) et/ou dudit au moins un autre véhicule (104) dans le convoi de véhicules (106) selon la grandeur de commande optimisée (304), et
dans lequel la grandeur de commande (304) optimisée, calculée par l'unité de calcul (114), est réalisée pour aligner le véhicule (102) au moyen du guidage longitudinal et/ou transversal par rapport audit au moins un autre véhicule (104) de telle sorte qu'une moyenne formée par la FL et la wFL soit minimale.

2. Dispositif de commande (100) selon la revendication 1, **caractérisé en ce que** l'unité de détermination (108) mesure la FL et/ou la wFL, ou les calcule sur la base de données d'au moins un capteur (204) du véhicule (102) et/ou dudit au moins un autre véhicule (104).

3. Dispositif de commande (100) selon l'une quelconque des revendications 1 ou 2, **caractérisé en ce que** la grandeur de commande (300) comprend au moins une distance longitudinale (116) du véhicule (102) et/ou dudit au moins un autre véhicule (104) l'un par rapport à l'autre et/ou un décalage transversal (118) du véhicule (102) et/ou dudit au moins un autre véhicule (104) l'un par rapport à l'autre et/ou une vitesse de déplacement du véhicule (102) et/ou dudit au moins un autre véhicule (104) et/ou un niveau de conduite du véhicule (102) et/ou dudit au moins un autre véhicule (104) et/ou une position d'un élément aérodynamique du véhicule (102) et/ou dudit au moins un autre véhicule (104).

4. Dispositif de commande (100) selon l'une quelconque des revendications 1 à 3, **caractérisé en ce que** l'unité de stockage (112) est en outre réalisée pour calculer avant le stockage un écart entre d'une part la FL et la wFL déterminées et d'autre part la FL et la wFL stockées dans le diagramme caractéristique en association avec la grandeur de commande (300) modifiée, dans lequel l'unité de calcul (114) calcule la grandeur de commande optimisée (304) si l'écart est inférieur à une valeur seuil (306).

5. Dispositif de commande (100) selon l'une quelconque des revendications 1 à 4, **caractérisé en ce que** l'unité de stockage (112) est en outre réalisée pour calculer avant le stockage un écart entre d'une part la FL et la wFL déterminées et d'autre part la FL et la wFL stockées dans le diagramme caractéristique en association avec la grandeur de commande (300) modifiée, dans lequel l'unité de commande (112) est réalisée pour poursuivre la modification de la grandeur de commande (300) si l'écart est supérieur à un et égal à une valeur seuil (306).

6. Dispositif de commande (100) selon l'une quelconque des revendications 1 à 5, **caractérisé en ce que** le dispositif de commande (100) comprend en outre un dispositif de communication (120 ; 202) qui est réalisé pour
envoyer la grandeur de commande (300) et/ou la grandeur de commande optimisée (304) à l'autre véhicule (104) dans le convoi de véhicules et/ou pour recevoir la wFL de l'autre véhicule (104) dans le convoi de véhicules, en option dans lequel le dispositif de commande (100) est mis en œuvre dans le véhicule (102) dans le convoi de véhicules ; et/ou
envoyer la grandeur de commande (300) et/ou la grandeur de commande optimisée (304) d'un dispositif de traitement de données (200) à l'extérieur du convoi de véhicules au véhicule (102) et à l'autre véhicule (104) dans le convoi de véhicules, et/ou recevoir la FL du véhicule (102) et la wFL de l'autre véhicule (104) dans le convoi de véhicules, en option dans lequel le dispositif de commande (100) est mis en œuvre dans le dispositif de traitement de données (200) à l'extérieur du convoi de véhicules.

7. Dispositif de commande (100) selon l'une quelconque des revendications 1 à 6, **caractérisé en ce que** l'unité de stockage (112) comprend un réseau neuronal qui représente le diagramme caractéristique, et l'unité de calcul (114) est réalisée pour calculer au moyen du réseau neuronal la grandeur de commande (304) optimisant la FL et la wFL.

8. Dispositif de commande (100) selon l'une quelconque des revendications 1 à 7, **caractérisé en ce que** le dispositif de commande (100) est agencé à l'extérieur du véhicule (102) et/ou dudit au moins un autre véhicule (104), dans lequel le dispositif de commande (100) comprend en outre un dispositif de communication de données (202) qui est réalisé pour recevoir des données permettant de déterminer la FL et la wFL, au moyen desquelles l'unité de détermination (108) détermine la FL et la wFL, dans lequel l'unité de commande (110) envoie la grandeur de commande (300) au moyen du dispositif de communication de données (202) pour le guidage longitudinal et/ou transversal du véhicule (102) et/ou dudit au moins un autre véhicule (104) dans le convoi de véhicules (106) au véhicule (102) et/ou audit au moins un autre véhicule (104).

9. Dispositif de commande (100) selon la revendication 8, dans lequel l'unité de calcul (114) est mise en œuvre dans un réseau informatique ou un serveur virtualisé.

10. Dispositif de commande (100) selon l'une quelconque des revendications 1 à 9, **caractérisé en ce que** l'unité de calcul (114) calcule la grandeur de commande optimisée (304) en raison de la FL et de la wFL pour minimiser une puissance d'entraînement du véhicule (102) et dudit au moins un autre véhicule (104).

11. Dispositif de commande (100) selon l'une quelconque des revendications 1 à 10, **caractérisé en ce que** l'unité de commande (110) est réalisée pour réguler la grandeur de commande (300) du guidage longitudinal et/ou transversal du véhicule (102) et/ou dudit au moins un autre véhicule (104) dans le convoi de véhicules (106).

12. Dispositif de commande (100) selon l'une quelconque des revendications 1 à 11, **caractérisé en ce que** le dispositif de commande (100) est agencé dans le véhicule (102) et/ou dans ledit au moins un autre véhicule (104) et est réalisé pour commander et/ou réguler plusieurs véhicules (102, 104) ou tous les véhicules (102, 104) du convoi de véhicules (106).

13. Dispositif de commande (100) selon l'une quelconque des revendications 1 à 12, **caractérisé en ce que** l'unité de stockage (112) est réalisée pour stocker la FL et la wFL déterminées à l'état de la grandeur de commande (300) modifiée dans le diagramme caractéristique (302) en association avec la grandeur de commande (300) modifiée ainsi qu'au moins un paramètre (308), dans lequel le paramètre (308) affecte de préférence une vitesse du vent et/ou une géométrie de véhicule, la FL et/ou la wFL sans être commandé par l'unité de commande (110).

14. Véhicule (102), en particulier véhicule utilitaire, qui est réalisé pour un guidage longitudinal et/ou transversal dans un convoi de véhicules (106) comprenant deux ou plusieurs véhicules, **caractérisé en ce que** le véhicule (102) comprend :
un dispositif de commande (100) selon l'une quelconque des revendications 1 à 13 pour un guidage longitudinal et/ou transversal du véhicule (102).
